# EUROPÄISCHE PATENTSCHRIFT

(11) **EP 1 910 153 B1**
(45) Veröffentlichungstag und Bekanntmachung des Hinweises auf die Patenterteilung: **08.10.2008**
(21) Anmeldenummer: 06763539.1
(22) Anmeldetag: 06.06.2006
(51) Int. Cl.: B62D 15/02

(54) **EINPARKVORRICHTUNG**
PARKING APPARATUS
DISPOSITIF D'AIDE AU STATIONNEMENT

(30) Priorität: 26.07.2005 DE 102005034700
(43) Veröffentlichungstag der Anmeldung: 16.04.2008
(73) Patentinhaber: ROBERT BOSCH GMBH, 70442 Stuttgart (DE)
(72) Erfinder: HUEPPAUFF, Martin, 70563 Stuttgart (DE); DANZ, Christian, 14532 Kleinmachnow (DE); UHLER, Werner, 76646 Bruchsal (DE); SEITER, Michael, 71735 Eberdingen-hochdorf (DE)
(86) Internationale Anmeldenummer: PCT/EP2006/062942
(87) Internationale Veröffentlichungsnummer: WO 2007/012516

(56) Entgegenhaltungen:
- EP-A- 1 288 071
- EP-A- 1 642 768
- DE-A1- 10 065 327

## Beschreibung

### Stand der Technik

Die Erfindung geht aus von einer Einparkvorrichtung nach der Gattung des Hauptanspruchs. Aus der DE 100 65 327 A1 ist bereits eine Lenkhilfsvorrichtung bekannt, bei der in einer Anzeige eine Lenkmaß-Führungsmarkierung, ein Zielparkraum und eine Ortslinie entsprechend einem Ortsverlauf des Fahrzeugs von der aktuellen Position in die Zielparkposition dargestellt wird. Hierbei ist eine Kamera zur Bildaufnahme eines rückwärts gerichteten Abschnitts vor einem Fahrzeug vorgesehen. In der Anzeige wird die Ortslinie als eine Lenkmaß-Führungslinie in das Anzeigebild eingetragen. Ebenso ist eine Bewegungsführungsanzeige vorgesehen, die einen Lenkwinkel vorgibt. Ferner sind Fahrzeugbreitenführungslinien vorgesehen, die zur Vorhersage von Positionen der beiden seitlichen Abschnitte des Fahrzeugs bei einem geraden Zurücksetzen dienen. Aus der entsprechenden Orientierung von Ortsverlauf, Bewegungsführungsanzeige und Fahrzeugbreiten-Führungslinien kann der Fahrzeugführer das Fahrzeug von der aktuellen Position in die Parklücke führen.

Aus der nachveröffentlichten EP 1 642 768 A1 ist ein Verfahren zur Anzeige eines Fahrzeugfahrraums bekannt, bei dem ein Fahrzeugfahrraum perspektivisch oder dreidimensional dargestellt wird, wobei eine einzunehmende Fahrtrichtung des Fahrzeugs mittels einer Variation der Lichtverhältnisse in der Darstellung des Fahrzeugfahrraums angezeigt wird. Darüber hinaus ist es auch bekannt, einen Umlenkpunkt, ab dem der Fahrer einen Lenkeinschlag wechseln muss, in der Anzeige darzustellen.

### Vorteile der Erfindung

Die erfindungsgemäße Einparkvorrichtung mit den Merkmalen des Anspruchs 1 hat demgegenüber den Vorteil, dass in eine Einparktrajektorie, die in ein Kamerabild eingeblendet wird, Umlenkpunkte gegenüber der übrigen Einparktrajektorie hervorgehoben eingeblendet werden. Im Allgemeinen ist es während eines

Einparkvorgangs erforderlich, die Lenkung des Fahrzeugs in bestimmter Weise einzuschlagen, um das Fahrzeug auf der gewünschten Parkposition zu positionieren. Gegebenenfalls ist es sogar erforderlich, mehrzügig einzuparken, indem das Fahrzeug nicht nur gelenkt, sondern auch in der Fahrtrichtung mehrfach nach vorne und nach hinten bewegt wird. Unter einem Umlenkpunkt soll hierbei derjenige Punkt auf einer Einparktrajektorie verstanden werden, an dem der Fahrer den aktuell eingeschlagenen Lenkwinkel des Fahrzeugs ändert. So kann z.B. an einem Umlenkpunkt von einem Volleinschlag nach links zu einem Volleinschlag nach rechts gewechselt werden. Es sind aber auch andere Änderungen des Lenkeinschlags mit einem geringeren Betrag einer Lenkwinkeländerung möglich. Unter dem Umlenkpunkt ist hierbei ein Bereich auf der Einparktrajektorie zu verstehen, innerhalb dem der Fahrer eine entsprechende Lenkkorrektur durchführen kann. Da es nicht möglich ist, das Fahrzeug punktgenau an einer einzigen, definierten Stelle anzuhalten, ist die Größe des Umlenkpunktes hierbei räumlich ausgedehnt und darüber hinaus durch die Toleranzen der Wege- und Lenkwinkelerfassung und des Messfehlers bei der Parklückenvermessung bestimmt. Gegebenenfalls kann eine zusätzliche Toleranz einbezogen werden, die es einem Fahrer erleichtert, innerhalb eines entsprechenden, größeren Bereiches anzuhalten oder das Fahrzeug entsprechend zu verzögern, um den Lenkvorgang durchzuführen.

Indem die Umlenkpunkte auf einer Einparktrajektorie, also dem Einparkweg von der aktuellen Position des Fahrzeugs zu einer gewünschten Parkposition, gesondert in der Anzeige eingeblendet werden, kann der Fahrer sehr einfach und schnell erkennen, welche Strecken er einerseits mit einem ungeänderten Lenkwinkel recht zügig zurücklegen kann, während er andererseits auch erkennen kann, an welchen Punkten er das Fahrzeug verzögern muss, um eine entsprechend angegebene bzw. aus der angezeigten Einparktrajektorie erkennbare Änderung des Lenkwinkels durchführen zu können.

Durch die in den Unteransprüchen aufgeführten Maßnahmen sind vorteilhafte Weiterbildungen und Verbesserungen der im Anspruch 1 angegebenen Einparkvorrichtung möglich. Besonders vorteilhaft ist es, während des Einparkvorgangs eine Symboldarstellung in die Anzeige einzublenden, mittels der eine Annäherung an den Umlenkpunkt verdeutlicht wird. Hierdurch kann der Fahrer erkennen, welchen Abstand sein Fahrzeug noch zu dem Umlenkpunkt hat. Er kann dann entsprechend sein Fahrzeug so verzögern, dass es an dem Umlenkpunkt zum Stehen kommt oder zumindest so stark verzögert wird, dass er den Umlenkvorgang durchführen kann, ohne von der Einparktrajektorie abzuweichen.

Besonders vorteilhaft wird die Annäherung an den Umlenkpunkt durch eine Einfärbung entsprechend dem Abstand zu dem Umlenkpunkt kenntlich gemacht. Ferner ist es besonders einfach erkennbar, eine Rollbalkendarstellung zu verwenden, um den Fortschritt auf der Einparktrajektorie und die Annäherung an einen Umlenkpunkt zu verdeutlichen. Um die Wiedererkennbarkeit für den Fahrer gegenüber der realen Szenerie zu erhöhen, werden die Rollbalken bevorzugt derart perspektivisch in das Anzeigebild eingeblendet, dass sie für den Fahrer wie auf die Straße aufgemalt erscheinen.

Ferner ist es vorteilhaft, bei einem Erreichen eines Umlenkpunktes einen Lenkhinweis optisch und/oder akustisch an den Fahrer auszugeben. Er kann dann entsprechend dem Lenkhinweis die Lenkung einschlagen.

Ferner ist es vorteilhaft, den aktuell eingeschlagenen Lenkwinkel in die Anzeige einzutragen. Hierdurch kann der Fahrer den aktuellen Lenkwinkel mit der Einparktrajektorie an dem Umlenkpunkt in Deckung bringen, um das Fahrzeug in die Parklücke zu steuern.

Ferner ist es vorteilhaft, neben einer Kameradarstellung einen Bereich in der Anzeige vorzusehen, in dem die Einparktrajektorie und gegebenenfalls auch wenigstens ein Umlenkpunkt dargestellt werden, wenn der Umlenkpunkt derart angeordnet ist, dass er außerhalb des Sichtbereichs der Kamera liegt. Der Umlenkpunkt kann dabei so weit vom Fahrzeug entfernt sein, dass er nicht mehr im Kamerabild erscheint. Insbesondere ist es aber vorteilhaft, eine Anzeigendarstellung für eine Anzeige eines Umlenkpunktes zu wählen, der derart nahe am Fahrzeug liegt, dass er nicht mehr im Kamerabild aufgenommen wird. Dies kann insbesondere bei sehr engen Parklücken der Fall sein, bei dem ein Fahrer sehr nah an ein Hindernis heranfahren muss, um die gewünschte Parklückenposition zu erreichen.

Weiterhin ist es vorteilhaft, in die Anzeige der Rückfahrkamera dem Fahrer auch Hinweise für ein Vorwärtsfahren zu geben, indem Umlenkpunkte bei einem Vorwärtsfahren in einer geeigneten rechnerischen Darstellung in die Anzeige eingeblendet werden. Insbesondere erfolgt diese Einblendung in einem Randbereich der Anzeige, wobei eine dargestellte Einparktrajektorie in den Randbereich, in dem kein Kamerabild, sondern ein berechnetes Bild dargestellt wird, fortgeführt wird. Hierdurch kann dem Fahrer auch bei einem mehrzügigen Einparken, das auch ein Vorwärtsfahren erfordert, eine Unterstützung gegeben werden. Insbesondere können dem Fahrer entsprechende Umlenkpunkte bei der Vorausfahrt auf einfache Wiese angegeben werden.

### Zeichnung

Ausführungsbeispiele der Erfindung sind in der Zeichnung dargestellt und in der nachfolgenden Beschreibung näher erläutert. Es zeigen
Figur 1 ein Fahrzeug mit einer erfindungsgemäßen Einparkvorrichtung,
Figuren 2 bis 5 Darstellungen einer Anzeige bei der Durchführung eines erfindungsgemäßen Einparkverfahrens.

### Beschreibung des Ausführungsbeispiels

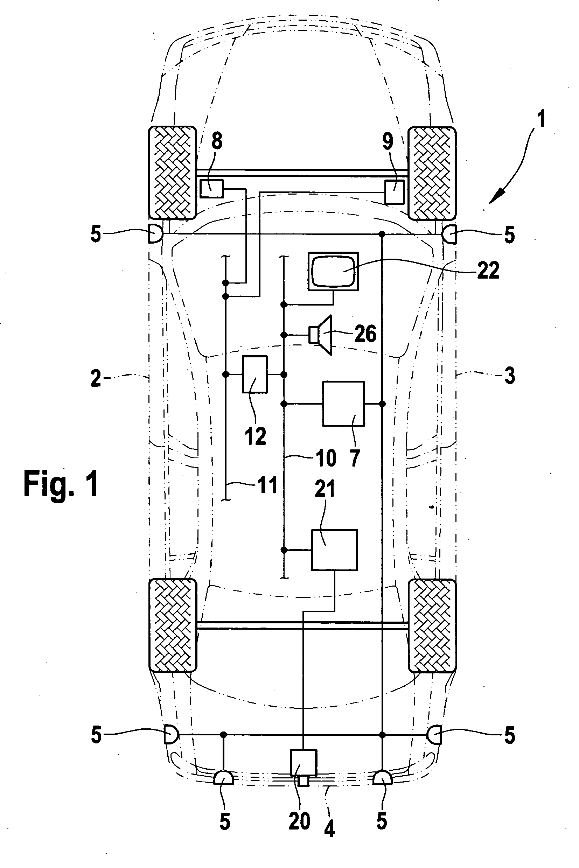

In der Figur 1 ist schematisch eine Aufsicht auf ein Fahrzeug 1 gezeigt, das über eine erfindungsgemäße Einparkvorrichtung verfügt. Das Fahrzeug 1 weist an einer linken Fahrzeugseite 2, an einer rechten Fahrzeugseite 3 und an der Fahrzeugrückseite 4 Abstandssensoren 5 auf, die einen Abstand zu einem Hindernis messen. Die Abstandssensoren 5 sind hierbei vorzugsweise als Ultraschallsensoren ausgeführt. Es können auch beliebige andere optische, kapazitive oder Radar-Sensoren verwendet werden. Werden Ultraschallsensoren verwendet, so erfolgt eine Messung in der Weise, dass die Abstandssensoren jeweils ein Schallsignal aussenden, das Schallsignal von einem Hindernis reflektiert wird und aus der gemessenen Laufzeit ein Abstand zu dem Hindernis bestimmt wird. Bei dem hier gezeigten Ausführungsbeispiel sind an der linken Seite 2 und an der rechten Seite 3 jeweils zwei Abstandssensoren angeordnet. Diese Abstandssensoren dienen dazu, bei einer Vorbeifahrt an einer geeigneten Parklücke, die insbesondere parallel zu einer Fahrtrichtung des Fahrzeugs ausgerichtet ist, sowohl die Tiefe, als auch die Breite der Parklücke zu vermessen. Die gemessenen Abstandsdaten werden an eine Auswerteeinheit 7 weitergeleitet. In der Auswerteeinheit 7 sind die Abmaße des Fahrzeugs 1 gespeichert. Durch einen Vergleich der gemessenen Parklückengröße mit den Abmaßen des Fahrzeugs wird ermittelt, ob das Fahrzeug in die Parklücke hineinpasst. Hierzu ist eine Parklücke erforderlich, die sowohl in der Breite, als auch in der Länge derart hinreichend über das Fahrzeug hinausragt, dass bei einem Einparken des Fahrzeugs der Manövrierabstand zu den Hindernissen ausreicht, die die Parklücke unter Einschluss eines Sicherheitsabstands begrenzen. Wird eine geeignete Parklücke festgestellt, so kann der Fahrer über eine in der Figur 1 nicht gezeigten Bedieneinheit den Einparkvorgang starten.

Während der Vorbeifahrt an der Parklücke ist bevorzugt über einen (oder mehrere) Radsensor(en) 8 und gegebenenfalls auch über einen Lenkwinkelsensor 9 die von dem Fahrzeug 1 in Bezug auf die Parklücke zurückgelegte Wegstrecke des Fahrzeugs aufgezeichnet worden. Der Radsensor 8 sowie der Lenkwinkelsensor 9 sind, z.B. über ein weiteres Steuergerät, das hier nicht gezeigt ist, bevorzugt an einen Datenbus 11, z.B. einen CAN-Bus, angeschlossen, über den auch andere Fahrzeugdaten, insbesondere Triebstrangsinformationen übertragen werden. Der Datenbus 11 ist bevorzugt über ein Gateway 12 mit einem Datenbus 10 verbunden, an den auch die Auswerteeinheit 7 angeschlossen ist. Aus den Radsensordaten wird dabei die zurückgelegte Wegstrecke bestimmt. Über den Lenkwinkelsensor steht der eingeschlagene Lenkwinkel zur Verfügung. Die Auswerteeinheit 7 kann nun einerseits aus den gemessenen Abstandsdaten und andererseits aus den Wegedaten des Fahrzeugs die Position des Fahrzeugs gegenüber der Parklücke bestimmen. Die Auswerteeinheit 7 berechnet nun ferner ausgehend von der aktuellen Position des Fahrzeugs eine Einparktrajektorie, die in die gemessene Parklücke führt. Die Einparkunterstützung kann z.B. durch das Einlegen des Rückwärtsgangs aktiviert werden.

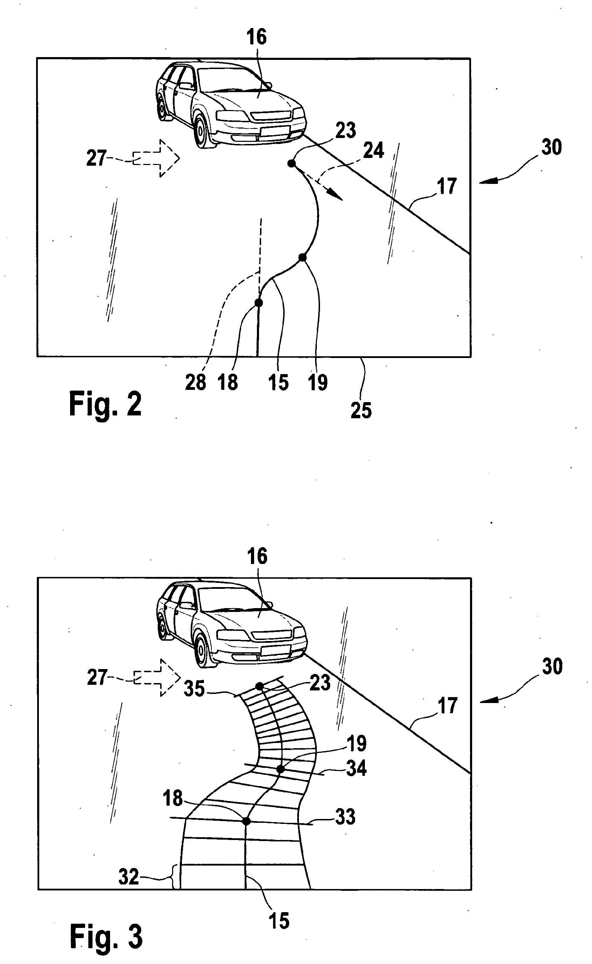

Hat ein Benutzer den Einparkvorgang aktiviert, so wird eine Kamera 20, die an der Rückseite 4 des Fahrzeugs angeordnet ist, aktiviert. Die Kamera 20 erfasst ein Bild, das an eine Steuerungseinheit 21 weitergegeben und von dieser auf den Datenbus 10 gegeben wird. Über den Datenbus 10 wird das von der Kamera 20 aufgenommene Bild des rückwärtigen Fahrraums des Fahrzeugs an eine Anzeige 22 weitergeleitet. In der Anzeige 22 kann der Fahrer nunmehr eine rückwärtige Ansicht des Raumes hinter dem Fahrzeug erkennen. Von der Auswerteeinheit 7 wird eine Darstellung der Einparktrajektorie bestimmt, die in das Kamerabild projiziert und ebenfalls in der Anzeige 22 dargestellt wird. In der Figur 2 ist beispielhaft eine Darstellung einer Einparktrajektorie 15 gezeigt, die von der aktuellen Position des Fahrzeugs zu einer Parkposition vor einem weiteren Fahrzeug 16 führt, das an einem Straßenrand 17 gemäß der Kamerabilddarstellung in der Figur 2 abgestellt ist. Der Fahrer des Fahrzeugs 1 muss nun die Lenkung bei einer Rückwärtsfahrt derart einstellen, dass das Fahrzeugs entlang der Einparktrajektorie 15 geführt wird. In der Figur 2 ist als Einparktrajektorie beispielhaft die Position der Mitte der Hinterachse des Fahrzeugs 1 als ein Bezugspunkt für die Einparktrajektorie gewählt. Es können auch ein Bewegungsverlauf von einer oder von zwei seitlichen Begrenzungen des Fahrzeugs 1 in der Anzeige 22 dargestellt werden, um die Einparktrajektorie dem Fahrer aufzuzeigen. Anstelle einer Position der Mitte der Hinterachse kann auch eine Position in der Mitte der Stoßstange des Fahrzeugs oder auch eine virtuelle Position Grundlage für den Verlauf der Einparktrajektorie und damit für die Anordnung der Umlenkpunkte auf der Einparktrajektorie sein. So kann z.B. ein von der Einparkvornchtung 10 cm hinter dem Fahrzeug auf dem Boden eingezeichneter Punkt als derjenige Punkt definiert sein, entlang dem die Einparktrajektorie geführt wird. Überdeckt sich dieser Punkt mit einem Umlenkpunkt, so kann der Fahrer ein Umlenken durchführen.

Die Einparktrajektorie ist dabei bevorzugt in der Weise zusammengesetzt, dass Bereiche aneinandergefügt sind, in denen der Lenkeinschlag verschieden ist. Innerhalb des einzelnen Bereichs eines Lenkeinschlags ist der jeweilige Lenkeinschlag dagegen konstant. Folgt ein Fahrer der Einparktrajektorie, so muss er bevorzugt nicht stets die Lenkung ändern, sondern kann die Bereiche eines konstanten Lenkeinschlags ohne eine Lenkänderung entlang fahren. Zwischen den Bereichen mit einem konstanten Lenkeinschlag sind in der Figur 2 ein erster Umlenkpunkt 18 und ein zweiter Umlenkpunkt 19 angegeben. Zunächst ist das Fahrzeug bis zu dem ersten Umlenkpunkt 18 gerade zurückzusetzen. Danach ist es nach links einzuschlagen und entsprechend nach links eingeschlagen zurückzusetzen, bis der zweite Umlenkpunkt 19 erreicht ist. Nun ist der Einschlag des Fahrzeugs nach rechts zu ändern, so dass das Fahrzeug bis zu einem dritten Umlenkpunkt 23 zurückgeführt wird In einer ersten Ausführungsform kann an dem dritten Umlenkpunkt 23 die Lenkung noch gerade gestellt werden, um das Fahrzeugs dann an dieser Position ungeändert zu lassen. Ist es jedoch erforderlich, in eine gegebenenfalls noch engere Parklücke weiter hineinzufahren, kann der Einparkvorgang durch Vorsetzen und Zurücksetzen des Fahrzeugs, angedeutet durch den Pfeil 24, von hier aus verbunden mit einer entsprechenden Lenkänderung noch fortgeführt werden.

Die Berechnung der Solltrajektorie ist nicht darauf eingeschränkt, dass der Fahrer das Fahrzeug nur im Stand umlenkt. Es lassen sich auch derartige Einparktrajektorien berechnen, die ein kontinuierliches Umlenken während des Fahrens beinhalten und/oder nur mit Teileinschlägen der Lenkung arbeiten. Kommt es in diesem Fall dazu, dass der Fahrer von der entsprechenden Trajektorie abweicht, so muss gegebenenfalls eine Korrektur des Lenkeinschlags durchgerührt werden. Hierbei kann auch ein während des Abfahrens der Einparktrajektorie infolge der Abweichung erforderlich gewordener Umlenkpunkt dargestellt werden, um dem Fahrer Gelegenheit zu geben, die Lenkung entsprechend nachzuregeln. Unterstützend können in einem solchen Fall die Bereiche zwischen dem dargestellten, eingeschlagenen Lenkwinkel und der Solltrajektorie blinken, um den Fahrer auf die aufgetretene Abweichung hinzuweisen.

In dem in der Figur 2 gezeigten Ausführungsbeispiel sind die Umlenkpunkte durch Verdickungen der Einparktrajektorie, die hier kreisförmig ausgerührt sind, in das Kamerabild eingeblendet. Entsprechend ist es auch möglich, insbesondere zur Kennzeichnung eines größeren Umlenkbereiches, eine ellipsenförmige Ausbildung eines Umlenkpunktes auf den Verlauf der Einparktrajektorie einzublenden. Der Fahrer erkennt bei einer Annäherung der Darstellung des Umlenkpunktes an einen unteren Rand 25 der Anzeigefläche 30, dass eine Umlenkung vorgenommen werden muss. In einer ersten Ausführungsform kann ein entsprechender Lenkhinweis über einen Lautsprecher 26 an den Fahrer ausgegeben werden. Der Lautsprecher 26 ist bevorzugt an den Datenbus 10 angeschlossen und wird von der Auswerteeinheit 7 angesteuert. In einer weiteren Ausführungsform kann z.B. auch ein Lenksignal, z.B. eine entsprechende Pfeildarstellung 27, nur beispielhaft gestrichelt in der Figur 2 dargestellt in die Anzeigefläche 30 eingeblendet werden.

In einer bevorzugten Ausführungsform wird in der Anzeigefläche 30 ein weiterer Verlauf der Fahrt des Fahrzeugs bei einem aktuell eingestellten Lenkwinkel projiziert. Bei der Darstellung gemäß der Figur 2 fährt das Fahrzeug zurück, so dass eine Darstellung der erwarteten Fahrzeugbewegung bei einem ungeänderten Lenkwinkel entsprechend der gestrichelten Darstellung 28 zu erwarten wäre. An dem Umlenkpunkt ist dabei die Lenkung soweit einzuschlagen, dass sich die erwartete Lenkeinstellung nunmehr mit dem Verlauf der geplanten Einparktrajektorie bis zu dem nächsten Umlenkpunkt deckt. An dem nächsten Umlenkpunkt kann dann eine nächste Korrektur erfolgen.

Die an der Rückseite 4 angeordneten Abstandssensoren dienen insbesondere dazu, bei einem Zurücksetzen des Fahrzeugs den Fahrer gegebenenfalls durch ein akustisches Signal über einen Lautsprecher 26 vor einem drohenden Zusammenstoß zu warnen, falls er einen entsprechenden Umlenkpunkt überfahren hat oder falls sich plötzlich ein Hindernis in den Raum hinter dem Fahrzeug bewegt hat. Werden dem Fahrer akustische Hinweise zum Anhalten an dem Umlenkpunkt oder zum Einschlagen der Lenkung gegeben, so unterscheiden sich diese Hinweise vorzugsweise von Warnungen vor einem drohenden Zusammenstoß mit einem Hindernis. Hierdurch kann der Fahrer entsprechende, besonders relevante Abstandswarnungen von den Unterstützungshinweisen gut unterscheiden.

In der Figur 3 ist ein weiteres Ausführungsbeispiel für eine Darstellung einer Einparktrajektorie dargestellt. Um die Einparktrajektorie 15 herum sind nun insbesondere entsprechend einer Breite des Fahrzeugs Balkendarstellungen 32 eingetragen. Die Balkendarstellungen sind dabei bevorzugt in ihrer Länge entlang der Einparktrajektorie derart gewählt, dass sie äquidistante Wegintervalle entlang der Einparktrajektorie beschreiben. Ein Rollbalken ist dabei bevorzugt in der Weise ausgestaltet, dass die Fahrstrecke in einzelne, möglichst äquidistante Intervalle durch Querstriche, an ihrer Position jeweils senkrecht zur Einparktrajektorie, unterteilt ist. Der Fahrer kann nun bei der Fahrt entlang der Einparktrajektorie anhand der Unterteilung mittels der Balken 32 erkennen, welchen Abstand er noch bis zu einem Umlenkpunkt jeweils zurückzulegen hat. Aus Gründen der Übersichtlichkeit ist nur einer der Balken mit einem Bezugszeichen 32 versehen. Ebenfalls ist es bei dieser Darstellung vorteilhaft, den Umlenkpunkt ebenfalls durch eine Linie 33, 34 bzw. 35, die sich an dem Umlenkpunkt senkrecht zu der Einparktrajektorie verhält, zu kennzeichnen. Hierdurch lässt sich die Position des Umlenkpunktes besonders gut abschätzen.

Mit einer Annäherung an einen Umlenkpunkt können die einzelnen Balken auch eingefärbt werden. So kann z.B. der letzte Balken vor dem Umlenkpunkt rot, zwei Balken vorher gelb und alle weiteren Balken grün eingefärbt sein. Ein Fahrer kann somit besonders gut erkennen, wann er das Fahrzeug anhalten muss, um den Umlenkvorgang durchzuführen.

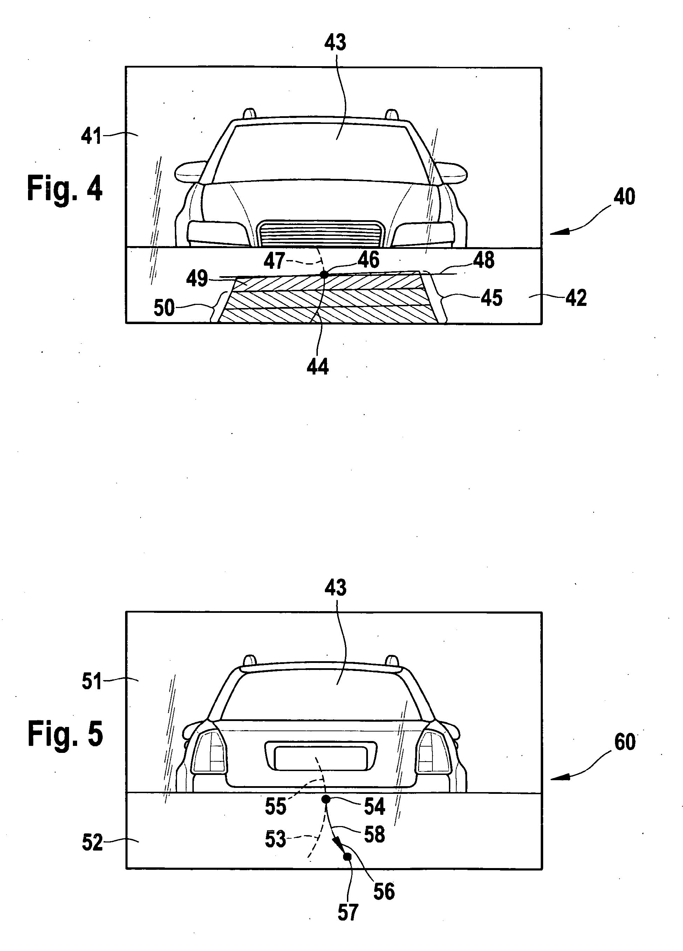

Die Kamera des Fahrzeugs ist beispielsweise im Bereich einer Stoßstange des Fahrzeugs oder im Bereich des Kofferraums angeordnet. Sie kann aber auch in einem Bereich oberhalb der Rückscheibe vorgesehen sein. Je nach der Anordnung der Kamera, aber auch nach Anordnung des Blickwinkels der Kamera, ist es möglich, dass nicht der gesamte Bereich des Fahrzeugs bildlich dargestellt werden kann. So ist es z.B. möglich, dass ein Bereich unmittelbar hinter dem Fahrzeug durch die Stoßstange oder einen Kofferraum des Fahrzeugs abgedeckt wird. Der Bereich unmittelbar vor dem Fahrzeug kann daher nicht eingesehen werden. Um auch in dem Nahbereich dem Fahrer anzeigen zu können, wann sich das Fahrzeug einem Umlenkpunkt nähert, ist in der Anzeigefläche 40 gemäß der Figur 4 ein erster Bereich 41 und ein zweiter Bereich 42 in der Anzeigefläche vorgesehen. In dem ersten Bereich 41 erfolgt eine tatsächliche Darstellung des aufgenommenen Kamerabildes, wobei in dem hier gezeigten Ausführungsbeispiel ein Kraftfahrzeug 43 sichtbar ist. In dem zweiten Bereich 42 erfolgt eine rein rechnerische Darstellung, wobei eine Darstellung einer Einparktrajektorie 44, eine Balkendarstellung 45 und eine Darstellung des Umlenkpunktes 46 sowie gegebenenfalls auch eine Darstellung des eingeschlagenen Lenkwinkels 47 erfolgt. Die Darstellung des Umlenkpunktes wird durch eine entsprechende Markierung 48 unterstützt. Ein erster Balken 49 ist rot eingefärbt, während die weiteren Balken 50 gelb eingefärbt sind, um eine nahende Annäherung an den Umlenkpunkt 46 zu verdeutlichen. Bei dem hier dargestellten Ausführungsbeispiel wird das Fahrzeug bis zu dem Umlenkpunkt 46 zurückgesetzt, anschließend wird die Lenkung entsprechend eingeschlagen, um gegebenenfalls eine Korrektur durch eine Vorwärtsfahrt vornehmen zu können. Gegebenenfalls können auch Umlenkpunkte bzw. Trajektorienbereiche, die zu weit von dem Fahrzeug weg liegen, an einem oberen Bereich der Anzeige rechnerisch dargestellt werden.

In der Figur 5 ist ein weiteres Ausführungsbeispiel für eine Anzeigenfläche 60 gezeigt. Im Gegensatz zu den Figuren 2-4, in denen ein rückwärtiger Fahrraum des Fahrzeugs für eine Rückwärtsfahrt dargestellt wird, soll mit der Anzeigenfläche 60 dem Fahrer eine bei dem Einparkvorgang erforderliche Vorwärtsfahrt erleichtert werden. Eine solche Vorwärtsfahrt ist insbesondere bei einem mehrzügigen Einparken erforderlich. Denn sollte die Parklücke so knapp sein, dass ein Einparken in einem Zug nicht möglich ist, so ist auch ein gezieltes Vorwärtsfahren des Fahrzeugs nützlich, eine gewünschte Parkposition mit möglichst geringem Aufwand zu erreichen. Wird in der Anzeige der rückwärtige Fahrraum dargestellt, so schließt diese Darstellung an ihrem unteren Rand mit dem Stoßfänger des Fahrzeugs ab. Diese Darstellung entspricht einem ersten, oberen Anzeigebereich 51 in der Figur 5. Soll das Fahrzeug während des Einparkvorgangs vorfahren, z.B. wenn der Fahrer einen entsprechenden Umlenkpunkt 54 erreicht hat und/oder wenn der Fahrer den Vorwärtsgang eingelegt hat, so wird zusätzlich ein zweiter Anzeigebereich 52 unterhalb des ersten Bereichs eingeblendet. Der zweite Anzeigebereich 52 umfasst eine nicht von der Kamera erfasste Umgebung und damit eine berechnete Darstellung einer Einparktrajektorie 58, die nach Vorne und damit von dem Stoßfänger in das Innere des Fahrzeugs 1 hinein verläuft. Durch einen Pfeil 56 kann auf eine Vorwärtsfahrt gesondert hingewiesen werden. Auf der Einparktrajektorie 58 wird ein weiterer Umlenkpunkt 57 eingetragen. Ebenso kann auch der aktuell eingestellte Lenkwinkel mittels des zu erwartenden Fahrwegs 53 bei Vorwärtsfahrt eingetragen werden, wie er in der Figur 5 als eine gestrichelte Linie dargestellt ist. Ergänzend kann auch der Fahrweg 55 bei einer weiteren Rückwärtsfahrt weiterhin skizziert werden.

Bei der Darstellung der Umlenkpunkte kann vorteilhaft zwischen Umlenkpunkten, bei denen nur die Lenkrichtung geändert wird, und zwischen Umlenkpunkten, bei denen zusätzlich auch die Fahrtrichtung, rückwärts bzw. nach vorne, gewechselt wird, unterschieden werden. Eine Unterscheidung kann z.B. durch eine unterschiedliche Einfärbung der verschiedenen Arten von Umlenkpunkten in der Anzeige erfolgen;

In einer weiteren Ausführungsform kann der zweite Anzeigebereich 52 auch stets in der Anzeige reserviert werden. Erfolgt keine Vorwärtsfahrt, wird er, falls vorgesehen, entweder für die Ausführungsform der Darstellung gemäß der Figur 4 genutzt oder es werden in dem zweiten Anzeigebereich 52 Textmeldungen z.B. mit Warnhinweisen oder Fahrhinweisen ausgegeben.

In einer weiteren Ausführungsform ist es auch möglich, eine Bilddarstellung eine Kamera zur Überwachung des rückwärtigen Fahrraums während einer Vorwärtsfahrt vollständig abzuschalten.

Entsprechend zu der Aufnahme eines rückwärtigen Raumes des Fahrzeugs mit einer Kamera, kann aber auch der Raum vor dem Fahrzeug entsprechend mit einer weiteren Kamera beobachtet werden und eine Trajektorie kann in gleicher Weise in das Kamerabild eingezeichnet werden. Hierdurch ist es möglich, dem Fahrer eine gleiche Unterstützung sowohl für eine Rückfahrt, als auch für eine Fahrt nach vorne zu geben.

## Patentansprüche

1. Einparkvorrichtung für ein Fahrzeug mit einer Messeinrichtung (5) zur Vermessung einer Parklücke, mit einer Recheneinheit (7) zur Berechnung einer Einparktrajektorie (15) in die Parklücke, mit einer Kamera (20) zur Erfassung eines Fahrraums des Fahrzeugs (1) und mit einer Anzeige (22) zur Darstellung des Kamerabildes, wobei die Einparktrajektorie (15) in das Kamerabild eingeblendet ist, **dadurch gekennzeichnet, dass** auf der Einparktrajektorie (15) liegende Umlenkpunkte (18, 19, 23) in das Kamerabild eingeblendet werden.

2. Einparkvorrichtung nach Anspruch 1, **gekennzeichnet durch** einen Lenkwinkelsensor (9) zur Erfassung des eingestellten Lenkwinkels und eine Wegerfassungseinheit zur Messung einer zurückgelegten Wegstrecke, wobei während des Einparkvorgangs eine Symboldarstellung (32,45) zur Darstellung einer Annäherung an den Umlenkpunkt in das Kamerabild eingeblendet wird.

3. Einparkvorrichtung nach Anspruch 2, **dadurch gekennzeichnet, dass** eine Farbe von Symbolen der Symboldarstellung mit zunehmender Annäherung an den Umlenkpunkt geändert wird.

4. Einparkvorrichtung nach einem der Ansprüche 2-3, **dadurch gekennzeichnet, dass** eine Annäherung an einen Umlenkpunkt mittels einer Balkendarstellung angezeigt wird.

5. Einparkvorrichtung nach Anspruch 4, **dadurch gekennzeichnet, dass** die Balkendarstellung derart erfolgt, dass die Balken perspektivisch auf den Fahrweg projiziert sind.

6. Einparkvorrichtung nach einem der vorherigen Ansprüche, **dadurch gekennzeichnet, dass** bei einem Erreichen eines Umlenkpunkts ein Lenkhinweis (27) ausgegeben wird.

7. Einparkvorrichtung nach einem der vorherigen Ansprüche, **dadurch gekennzeichnet, dass** ein Wegverlauf (28) des Fahrzeugs bei einem unveränderten, aktuell eingestellten Lenkwinkel in der Anzeige dargestellt wird.

8. Einparkvorrichtung nach einem der vorherigen Ansprüche, **dadurch gekennzeichnet, dass** die Kamera einen rückwärtigen Fahrraum des Fahrzeugs überwacht.

9. Einparkvorrichtung nach Anspruch 8, **dadurch gekennzeichnet, dass** in der Anzeige eine berechnete Einparktrajektorie und wenigstens ein Umlenkpunkt für ein Vorwärtsfahren des Fahrzeugs für einen mehrzügigen Einparkvorgang dargestellt sind.

10. Einparkverfahren für ein Fahrzeug, wobei eine Parklücke vermessen wird, wobei eine Einparktrajektorie zum Einparken des Fahrzeugs in die Parklücke berechnet wird, wobei eine Fahrzeugumgebung von einer Kamera erfasst wird, wobei die Fahrzeugumgebung in einer Anzeige dargestellt wird und wobei die Einparktrajektorie in das Kamerabild der Fahrzeugumgebung in der Anzeige eingetragen wird, **dadurch gekennzeichnet, dass** auf der Einparktrajektorie liegende Umlenkpunkte zum Hinweis auf eine erforderliche Änderung eines eingeschlagenen Lenkwinkels an den jeweiligen Umlenkpunkten in das Kamerabild in der Anzeige eingetragen werden.

11. Einparkverfahren nach Anspruch 10, **dadurch gekennzeichnet, dass** ein außerhalb des Kamerabildes liegender Umlenkpunkt in eine berechnete Darstellung eines der berechneten Darstellung zugehörigen Bereichs der Fahrzeugumgebung in der Anzeige dargestellt wird.

## Claims

1. Parking apparatus for a vehicle having a measuring device (5) for measuring a parking space, having a computer unit (7) for calculating a parking trajectory (15) into the parking space, having a camera (20) for capturing a driving space of the vehicle (1), and having a display (22) for displaying the camera image, wherein the parking trajectory (15) is included in the camera image, **characterized in that** deflection points (18, 19, 23) which lie on the parking trajectory (15) are included in the camera image.

2. Parking apparatus according to Claim 1, **characterized by** a steering angle sensor (9) for sensing the steering angle which is set and a displacement-sensing unit for measuring a distance travelled, wherein during the parking process a symbol display (32, 45) for displaying the approach of the vehicle to the deflection point is included in the camera image.

3. Parking apparatus according to Claim 2, **characterized in that** the colour of symbols in the symbol display is changed as the vehicle increasingly approaches the deflection point.

4. Parking apparatus according to one of Claims 2-3, **characterized in that** the approach of the vehicle to a deflection point is displayed by means of a bar display.

5. Parking apparatus according to Claim 4, **characterized in that** the bar display is implemented in such a way that the bars are projected periodically onto the driving path.

6. Parking apparatus according to one of the preceding claims, **characterized in that** when a deflection point is reached a steering instruction (27) is issued.

7. Parking apparatus according to one of the preceding claims, **characterized in that** a travel profile (28) of the vehicle is displayed on the display in the event of an unchanged, currently set steering angle.

8. Parking apparatus according to one of the preceding claims, **characterized in that** the camera monitors a rear driving space of the vehicle.

9. Parking apparatus according to Claim 8, **characterized in that** a calculated parking trajectory and at least one deflection point for forward travel of the vehicle for a multi-manoeuvre parking process is displayed on the display.

10. Parking process for a vehicle, wherein a parking space is measured, wherein a parking trajectory for parking the vehicle into the parking space is calculated, wherein the surroundings of the vehicle are captured by a camera, wherein the surroundings of the vehicle are displayed on a display, and wherein the parking trajectory is input into the camera image of the surroundings of the vehicle on the display, **characterized in that** deflection points which lie on the parking trajectory are input into the camera image on the display in order to give an indication of a necessary change in a locked steering angle at the respective deflection points.

11. Parking apparatus according to Claim 10, **characterized in that** a deflection point which lies outside the camera image is displayed in a calculated representation of an area of the surroundings of the vehicle associated with the calculated representation on the display.

## Revendications

1. Dispositif d'aide au stationnement pour un véhicule comportant une installation de mesure (5) pour mesurer un emplacement de stationnement, une unité de calcul (7) pour calculer une trajectoire de stationnement (15) dans l'emplacement, une caméra (20) pour saisir l'espace de stationnement du véhicule (1) ainsi qu'un afficheur (22) pour représenter l'image de la caméra,
la trajectoire de la manoeuvre de stationnement (15) étant incrustée dans l'image de la caméra,
**caractérisé en ce qu'**
on incruste dans l'image de la caméra les points de changement de direction (18, 19, 23) situés sur la trajectoire (15) de la manoeuvre de stationnement.

2. Dispositif d'aide au stationnement selon la revendication 1,
**caractérisé par**
un capteur d'angle de braquage (9) pour saisir l'angle de braquage fixé ainsi qu'une unité de saisie de trajectoire pour mesurer le trajet parcouru, et au cours de la manoeuvre de stationnement, une représentation de symboles (32, 45) est incrustée dans l'image de la caméra pour représenter l'approche d'un point de changement de direction.

3. Dispositif d'aide au stationnement selon la revendication 2,
**caractérisé en ce que**
la couleur des symboles de la représentation symbolique varie à mesure que l'on se rapproche du point de changement de direction.

4. Dispositif d'aide au stationnement selon l'une des revendications 2 et 3,
**caractérisé en ce que**
l'approche d'un point de changement de direction est indiquée par une représentation sous la forme de barres.

5. Dispositif d'aide au stationnement selon la revendication 4,
**caractérisé en ce que**
la représentation sous la forme de barres est faite pour que les barres soient projetées en perspective sur la chaussée.

6. Dispositif d'aide au stationnement selon l'une des revendications précédentes,
**caractérisé en ce qu'**
une indication de braquage (27) est émise lorsqu'on atteint un point de changement de direction.

7. Dispositif d'aide au stationnement selon l'une des revendications précédentes,
**caractérisé en ce qu'**
on représente le trajet (28) du véhicule dans l'afficheur pour l'angle de braquage réglé actuellement et inchangé.

8. Dispositif d'aide au stationnement selon l'une des revendications précédentes,
**caractérisé en ce que**
la caméra surveille l'espace derrière le véhicule.

9. Dispositif d'aide au stationnement selon la revendication 8,
**caractérisé en ce que**
l'afficheur représente une trajectoire calculée pour la manoeuvre de stationnement et au moins un point de changement de direction pour une marche avant du véhicule dans le cas d'une manoeuvre de stationnement en plusieurs étapes.

10. Procédé de stationnement d'un véhicule selon lequel on mesure l'emplacement de stationnement, on calcule une trajectoire de stationnement pour ranger le véhicule dans l'emplacement de
stationnement,
une caméra saisissant l'environnement du véhicule, qui est représenté dans un afficheur et au moins la trajectoire de stationnement est ajoutée à l'image de la caméra correspondant à l'environnement du véhicule dans l'afficheur,
**caractérisé en ce que**
sur la trajectoire de stationnement, on a placé les points de changement de direction pour indiquer un changement nécessaire de l'angle de braquage réglé au niveau des points respectifs de changement de direction dans l'image de la caméra apparaissant sur l'afficheur.

11. Procédé de stationnement d'un véhicule selon la revendication 10,
**caractérisé en ce qu'**
un point de changement de direction situé à l'extérieur de l'image de la caméra est présenté dans une représentation calculée de la zone de l'environnement du véhicule dans l'afficheur, faisant partie de la représentation calculée.
